# EUROPÄISCHE PATENTSCHRIFT

(11) **EP 2 102 725 B1**
(45) Veröffentlichungstag und Bekanntmachung des Hinweises auf die Patenterteilung: **28.07.2010**
(21) Anmeldenummer: 07847375.8
(22) Anmeldetag: 27.11.2007
(51) Int. Cl.: G05B 19/23, G05B 19/4062, H02P 6/00, H03M 1/00

(54) **VERFAHREN UND VORRICHTUNG ZUM VERFOLGEN DER POSITION EINER VON EINEM ELEKTROMOTOR ANGETRIEBENEN KOMPONENTE**
METHOD AND DEVICE FOR TRACKING THE POSITION OF A COMPONENT DRIVEN BY AN ELECTRIC MOTOR
PROCÉDÉ ET DISPOSITIF POUR SUIVRE LA POSITION D'UN ÉLÉMENT ENTRAÎNÉ PAR UN MOTEUR ÉLECTRIQUE

(30) Priorität: 14.12.2006 DE 102006059146
(43) Veröffentlichungstag der Anmeldung: 23.09.2009
(73) Patentinhaber: Continental Automotive GmbH, 30165 Hannover (DE)
(72) Erfinder: HOLZMANN, Stefan, 2191 Gaweinstal (AT); MORAWEK, Roman, 1020 Wien (AT); POZZER, Alexandre, 13024-140 Campinas (BR)
(86) Internationale Anmeldenummer: PCT/EP2007/062848
(87) Internationale Veröffentlichungsnummer: WO 2008/071538

(56) Entgegenhaltungen:
- DE-A1- 4 412 028
- DE-A1-102005 006 694
- US-A- 4 085 890
- US-A- 4 514 670
- US-A- 4 591 770
- US-A- 5 159 248

## Beschreibung

Die Erfindung betrifft ein Verfahren sowie eine Vorrichtung gemäß den einleitenden Teilen der unabhängigen Patentansprüche.

Das Verfolgen, d.h. die laufende Erfassung, der Position eines elektromotorisch angetriebenen Bauteils kann auf vielen Gebieten von Bedeutung sein. In der Kraftfahrzeugtechnik werden verschiedene Kfz-Bauteile elektromotorisch angetrieben, wie etwa Fenster, Schiebedächer, aber auch Sitze oder Schiebetüren. In ähnlicher Weise ist die laufende Position von beweglichen Bauteilen in Gebäuden, etwa von angetriebenen Schiebetüren, Fenstern, Markisen, Jalousien usw., vielfach von Interesse und zu erfassen. Eine besondere Bedeutung kommt der Überwachung der Position des angetriebenen Bauteils bei Kraftfahrzeugen insofern zu, als im Fall von Fensterhebern oder Schiebedächern üblicherweise ein Einklemmschutzsystem verlangt ist und daher die Positionsüberwachung umso wichtiger ist, je mehr sich das Bauteil einer Schließposition nähert, da dann bei einem Anstieg in der Antriebs- oder Schließkraft auf ein eingeklemmtes Objekt zu schließen ist. Ein weiterer Aspekt ist, dass derartige Bauteile, wie Fensterheber oder Schiebedächer, aber auch Fahrzeugsitze mit Memory-Funktion, automatisch in die gewünschte Position bewegt werden, es sei denn es ergibt sich eine Verletzungsgefahr, wobei dann der automatische Antrieb gestoppt und auf ein Bewegen mit händischer Steuerung umgestellt wird.

Um in Kraftfahrzeugen die Position von Fensterhebern laufend zu erfassen, ist es üblich, auf die Drehbewegungen des von der Kfz-Batterie gespeisten Elektromotors ansprechende Sensormittel, nämlich Hall-Sensormittel oder Strom-Welligkeiten erfassende Sensormittel, einzusetzen, wobei die erwähnten Strom-Welligkeiten im Motorstrom zufolge der Motor-Kommutation bewirkt werden. Diese Erfassung der Strom-Welligkeiten und deren Zählung wird auch als "Ripple"-Zählung ("Ripple"-Welligkeit) bezeichnet.

Im Einzelnen werden dabei die einander überlagerten Stromänderungen erfasst, die bei den Kommutierungen in den Bürsten des Gleichstrommotors erzeugt werden. Andererseits werden, wie üblich, bei Verwendung von Hall-Sensormitteln bekanntlich Magnetpole an der Motorwelle benützt, die beim Umlauf der Motorwelle Hallsignal-Impulse bewirken, um die Motorposition zu erfassen.

Bei dieser Positionserfassung durch Zählung von Impulsen oder Stromzacken hat sich gezeigt, dass sich Fehler in der Positions-Zählung akkumulieren, was naturgemäß zur Vermeidung von Gefährdungen eines Benutzers des jeweiligen Systems berücksichtigt werden muss. Demgemäß war es in solchen Fällen bisher üblich, eine automatische Bewegung des angetriebenen Bauteils von vorneherein zu verhindern oder, als Notfallslösung, nach einer festen vorgegebenen Anzahl von kürzeren Bewegungen (in beiden Richtungen) zu beenden, auch wenn die gewünschte Position oder eine bekannte Position, wie z.B. eine Endposition, nicht erreicht wurde. Ein wesentlicher Nachteil dieser bekannten Lösung ist, dass das dynamische Verhalten der Antriebssysteme nicht berücksichtigt wird. Beispielsweise ist es, wenn die Bewegung kontrolliert erfolgt und keine zweifelhaften Situationen detektiert werden, nicht gerechtfertigt und nachteilig für die Funktionalität des Systems, wenn ohne wirkliche Notwendigkeit die automatischen Bewegungen beendet werden, was aber bei den bekannten Lösungen passiert. Andererseits sollte, wenn sich ungünstige Situationen ergeben, etwa im Fall von EMV-Störungen oder raschen Bewegungsumkehr-Ansteuerungen, das System so rasch wie möglich im Betriebsmodus auf einen Notstopp oder eine händische Steuerung umschalten können, um mögliche Beschädigungen des Systems oder Verletzungen von Benutzern durch Einklemmen zu verhindern - in diesen Fällen wäre es daher falsch und gefährlich eine fest vorgegebene Anzahl von Bewegungen bis zum Umschalten abzuwarten. DE 44 12 028 A1 offenbart ein Verfahren bzw. eine Vorrichtung gemäß dem Oberbegriff des Anspruchs 1 bzw. 7.

Es ist daher Aufgabe der Erfindung, hier Abhilfe zu schaffen und ein Verfahren bzw. eine Vorrichtung zur laufenden Überwachung der Positionen des angetriebenen Bauteils vorzuschlagen, wobei einerseits die Sicherheit von Personen und des jeweiligen Systems gegeben ist und andererseits die Funktionalität weitestgehend erhalten bleibt, und wobei auch der erforderliche Aufwand möglichst gering sein soll.

Zur Lösung dieser Aufgabe sieht die Erfindung ein Verfahren und eine Vorrichtung wie in den unabhängigen Ansprüchen definiert vor. Vorteilhafte Ausführungsformen und Weiterbildungen sind in den abhängigen Ansprüchen angegeben.

Gemäß der Erfindung wird dann, wenn bei der Positions-Zählung zweifelhafte, nicht sicher zu erfassende Situationen auftreten, ein Unschärfebereich oder -intervall auch als Toleranzbereich bezeichnet, der "punktmäßigen" Positions-Zählung hinzugefügt, wobei hierfür beispielsweise - im Sinne der Positions-Zählung - ein eigener Zähler, ein "Unschärfe"-Zähler oder "Unsicherheits"-Zähler, eingesetzt wird, um auf Basis der so gezählten Unschärfezustände das Unschärfeintervall zur Positions-Zählung, d.h. zur erfassten Position, hinzuzufügen. Wenn daher beispielsweise ein Bauteil, wie ein Fensterheber eines Kraftfahrzeugs, im Wesentlichen in eine Richtung, z. B. zum Schließen des Fensters, angetrieben wird, wobei aber gegebenenfalls die Bewegung mehrmals gestoppt und auch umgekehrt werden kann, so werden wie üblich die für die Positionsüberwachung üblichen Impuls- oder Ripple-Zählungen durchgeführt, wobei die Zählungen je nach Bewegungsrichtung im positiven oder negativen Sinn erfolgen. Wenn nun insofern unklare Situationen auftreten, dass an einer Stelle, wo eigentlich ein weiterer Zählimpuls vorhanden sein müsste, ein solcher Impuls nicht erfasst wird, oder aber knapp hintereinander zwei derartige Zählimpulse auftreten, so wird zwar die Positions-Zählung entsprechend den tatsächlich erkannten Zählsignalen vorgenommen, jedoch wird zugleich der Unschärfe-Zähler aktiviert, um so der durch die Zählung erhaltenen Position - vorzugsweise symmetrisch positiv wie negativ - ein Unschärfe-Inkrement hinzuzufügen. Dieses Inkrement entspricht bevorzugt pro detektierter Unsicherheit genau dem Ausmaß der Positionsänderung pro Zählsignal bzw. Zählimpuls.

Die Gründe für das Vorliegen von derartigen unsicheren oder unklaren Situationen hängen von der jeweils verwendeten Technologie und auch von den äußeren Umständen ab und können beispielsweise darin liegen, dass der Motor zu langsam oder zu schnell läuft, abrupte Änderungen in der Motordrehzahl eintreten, ein externes Rauschen in der Versorgungsspannung während der Bewegung des Bauteils, z.B. Fensters, auftritt oder abrupte Änderungen in der Richtung der Motorbewegung erfolgen. Dies ist die Hauptquelle für Unsicherheiten im Fall von 1-Hall-Technologie. Eine weitere Unsicherheitsquelle liegt in einer extern verursachten Motorbewegung, ohne Ansteuerung des Motorrelais. Es ist dann unklar, in welcher Richtung der Motor bewegt wird.

Wenn beispielsweise im Fall der Verwendung der Ripple-Zählung in einer Situation eine (zusätzliche) Stromzacke detektiert wird, ohne dass sie in dieser Situation zu erwarten ist, würde dies auf eine plötzliche große Änderung in der Motorgeschwindigkeit hinweisen, die bei einem Antrieb von Bauteilen, wie etwa im Fall eines mechanischen Fensterhebers oder Schiebedachantriebs, kaum vorstellbar ist. Deshalb wird diese Strom-Welligkeit (Ripple-Signal) zwar erfasst und bei der Positions-Zählung berücksichtigt, jedoch wird gleichzeitig ein Signal für die Hinzufügung eines Unschärfebereichs, insbesondere ein Unschärfeimpuls für einen Unschärfesignalzähler, erzeugt.

Es ist hier selbstverständlich nicht erforderlich, den Grund für derartige unklare Situationen, z.B. Änderungen in der Motordrehzahl, zu kennen - dieser könnte in äußeren Kräften, Rauschen usw. gelegen sein -, wichtig ist es vielmehr, dass diese Unsicherheits-Situationen detektiert und im Unschärfebereich berücksichtigt werden. Mit jeder weiteren derartigen Unsicherheits-Situation wird der Unschärfebereich verbreitert, d.h. die Unschärfesignal-Zählung erhöht. Wenn schließlich ein Maximum in der Breite des Unschärfebereichs erreicht wird, wobei dieses Maximum je nach den Umständen vorgegeben wird, dann wird bevorzugt eine bis dahin gegebene automatische Antriebsbewegung des Bauteils deaktiviert, so dass danach eine händisch gesteuerte Bewegung des Bauteils (selbstverständlich mit Hilfe des Antriebs durch den Elektromotor) notwendig wird.

Wird vom Bauteil eine feste, bekannte Position, wie etwa die endgültige Schließposition oder eine voll offene Stellung, erreicht, so wird, da diese Position exakt bekannt ist, der Unschärfebereich in dieser Position auf Null zurückgesetzt. Dieser an sich bekannte Vorgang wird üblicherweise Normierung oder Initialisierung genannt.

Aus Gründen einer einfachen Handhabung und aus Sicherheitsgründen ist es im Übrigen auch vorteilhaft, wenn der Unschärfebereich unabhängig davon, ob offenbar ein Zählsignal zu viel oder zu wenig erfasst wird, verglichen mit dem erwarteten Muster, das Unschärfe-Intervall immer symmetrisch beidseits der durch Zählung erfassten Position als Toleranzbereich hinzugefügt wird.

Mit dem erfindungsgemäßen Konzept wird somit die Position des überwachten Bauteils nach Auftreten von unsicheren Situationen nicht mehr durch jeweils einen einzelnen Punkt, sondern durch ein Unschärfe-Intervall für jede Positionsstelle definiert. Ein Hauptvorteil bei dieser Technologie ist, dass die volle Funktionalität (bevor z.B. die automatische Antriebsbewegung deaktiviert wird) über ein maximal langes Zeitintervall erhalten bleibt. Bei Verwendung dieses Unschärfe-Intervalls detektiert das System von selbst, wenn die Funktion nicht mehr verlässlich ist, und beschränkt dann die Funktionalität, d.h. es schaltet dann die automatische Bewegungssteuerung ab. Wie erwähnt ist es dabei nicht notwendig, den Grund für die Unsicherheits-Situationen zu eruieren, so dass der Aufwand gering ist, und dies weiters auch deshalb, weil auch keine aufwändigen Algorithmen zur Erfassung der genauen jeweiligen Position und keine aufwändigen Korrektur-Algorithmen erforderlich sind, die leistungsstarke Rechenmittel erfordern würden. Das einzige, was erforderlich ist, ist, dass das System erkennt, dass Probleme aufgetreten sind, wobei diese Probleme einfach zum Bilden des Toleranzbereichs führen. Das Mitführen dieses Unschärfe- oder Toleranzbereichs innerhalb akzeptabler Grenzen macht das System weiterhin verlässlich. Dabei wird den dynamischen Änderungen des Systems, wie einer raschen Drehrichtungsumkehr, externem Rauschen usw., ebenso wie den Unterschieden zwischen verschiedenen Systemeinheiten zu jeder Zeit Rechnung getragen, um die erfindungsgemäße Technologie verlässlich zu halten.

Die Erfindung wird nachfolgend anhand von besonders bevorzugten Ausführungsbeispielen, auf diese sie jedoch nicht beschränkt sein soll und unter Bezugnahme der Bezeichnung noch weiter erläutert. Es zeigen:
Die Fig. 1A und 1B zwei Diagramme zur Veranschaulichung der allgemeinen Vorgangsweise bei der Verfolgung, d.h. laufenden Überwachung, der Position eines Elektromotors bzw. dementsprechend eines motorangetriebenen Bauteils unter Vornahme einer Positions-Zählung;
Fig. 2 schematisch eine Kommutatoranordnung mit Bürsten, um die Herleitung eines bei der Kommutation auftretenden Stromzacken aufweisenden Strom-Welligkeits-Signals, auch Ripple-Signal genannt, zu veranschaulichen;
die Fig. 3 und 4 in Diagrammen ähnlich jenem gemäß Fig. 1B die Positionsüberwachung anhand von Ripple-Signalen, wobei unterschiedliche Unsicherheits-Situationen auftreten;
Fig.5 in einem Diagramm die durch Positions-Zählung erfasste Position über der Zeit unter Veranschaulichung eines erfindungsgemäß hinzugefügten Toleranz- bzw. Unschärfebereichs;
Fig. 6 ein Ablaufdiagramm zur Veranschaulichung der Vorgangsweise bei der Ermittlung eines solchen Unschärfebereichs im Fall der Positonszählung auf der Basis von Ripple-Signalen;
Fig. 7 ein System zur Ansteuerung eines Elektromotors unter Vorsehen eines Einklemmschutzes, mit einer gemäß der Erfindung ausgebildeten Vorrichtung zum Verfolgen der Position des Elektromotors und damit des vom Motor angetriebenen Bauteils;
Fig. 8 ein Ablaufdiagramm ähnlich Fig. 6 zur Veranschaulichung der Vorgangsweise im Fall der Positions-Verfolgung auf der Basis von Hallsignal-Impulsen;
Fig. 9 ein der Fig. 7 ähnliches Blockschaltbild eines Systems mit einer Vorrichtung zum Verfolgen der Position, wobei vom Elektromotor abgeleitete Hallsignal-Impulse zugrunde gelegt werden;
die Fig. 10 und 11 zwei typische Situationen bei einer Bewegungsrichtungsumkehr unter Verwendung von Hallsignal-Impulsen bei der Positions-Zählung; und
Fig. 12 in einem Diagramm ähnlich den Diagrammen gemäß Fig. 10 und 11 eine Positionserfassung, bei der eine Unsicherheits-Situation festgestellt und dementsprechend ein Unschärfe-Intervall der durch die Zählung erfassten Position hinzugefügt wird.

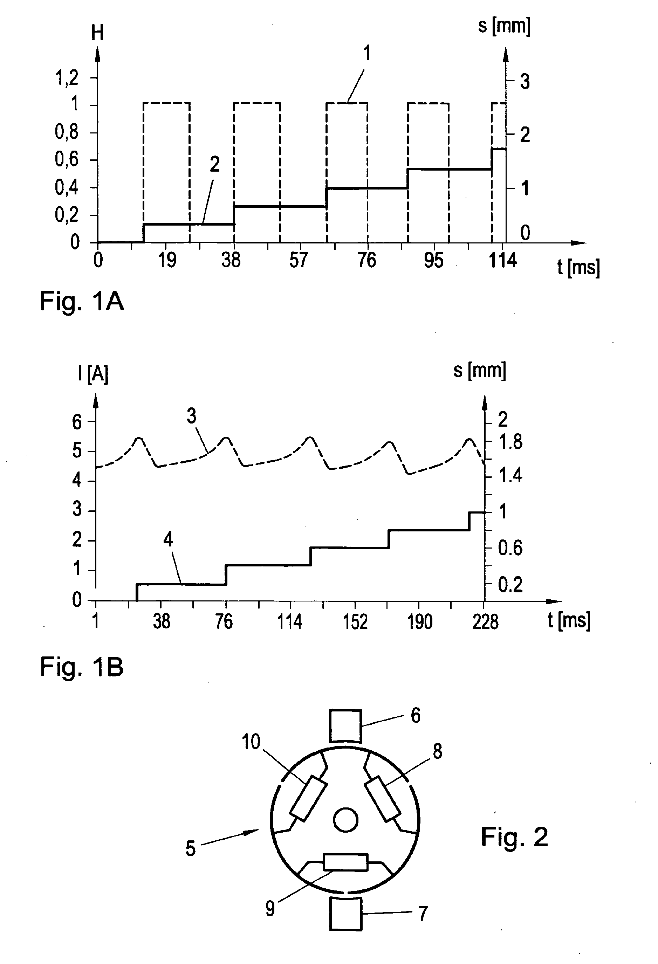

In Fig. 1 sind von einem üblichen Hall-Sensor, der zu Erfassung der Motordrehzahl vorgesehen ist, abgegebene Impulse 1 des Hallsignals H sowie zugehörige, aufgrund der Impulszählung vorgenommene, bei jedem Hallsignal-Impuls inkrementierte Positionszählerstände S als entsprechende Motor- oder Bauteil-Position 2 über der Zeit t veranschaulicht.

In ähnlicher Weise ist in Fig. 1B ein Motorstrom-Signal I mit Ripple-Welligkeiten 3 (Zacken oder Impulsen) sowie ein zugehöriges, bei jeder Ripple-Welligkeit 3 um eine Zähleinheit inkrementiertes Positionssignal 2 bzw. 4 über der Zeit t veranschaulicht.

Die Verwendung von Hall-Sensoren ist weit verbreitet, vgl. beispielsweise DE 9006935 U, so dass sich hier eine weitere Erläuterung erübrigen kann. Auch die Heranziehung des mit Welligkeiten (Ripples) behafteten Motorstroms für die Zählung und Inkrementierung des Positionssignals gemäß Fig. 1B ist an sich bekannt. Vorsorglich soll jedoch kurz anhand der Fig. 2 das zugehörige Prinzip erläutert werden. Es ist beispielsweise ein mit drei Segmenten ausgestatteter Kommutator 5 dargestellt, dem zwei Bürsten 6, 7 zugeordnet sind, wobei weiters durch die Motorwicklungen gegebenen Widerstände 8, 9 und 10 schematisch angedeutet sind. Der über die Bürsten 6, 7 erfasste Motorstrom ändert sich mehr oder weniger sprunghaft, siehe die Zacken in Fig. 1B, wenn ein Kommutatorsegment nach dem anderen an der jeweiligen Bürste 6 vorbei läuft, da sich dann der kombinierte WicklungsWiderstand ändert. Demgemäß sind die Welligkeiten oder Zacken im Stromverlauf 3 gemäß Fig. 1B ein Maß für die Drehbewegung des Elektromotors, und sie können daher zur Zählung für die laufende Ermittlung der Position des vom Motor angetriebenen Bauteils herangezogen werden.

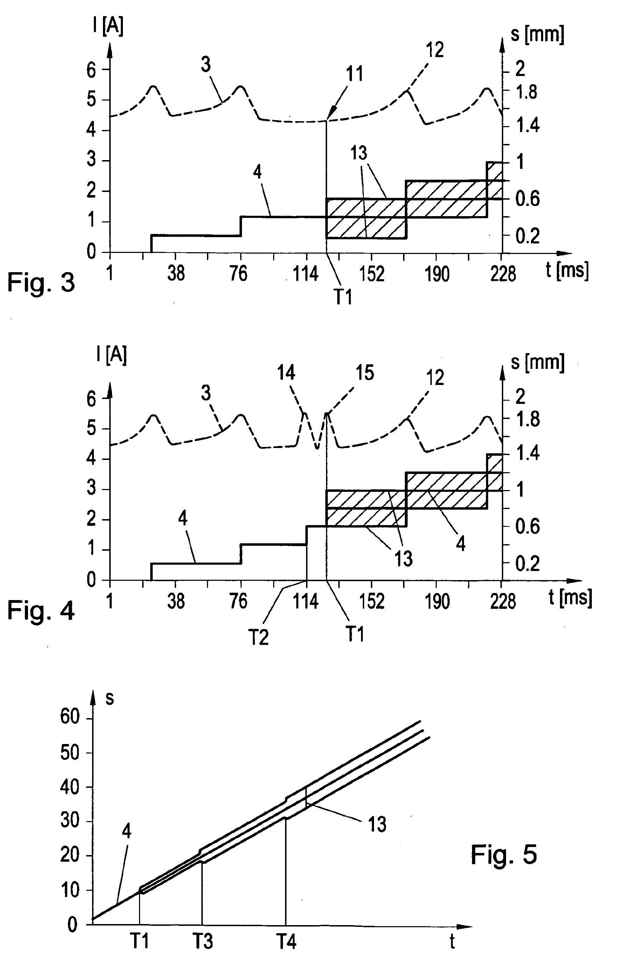

Nach diesen allgemeinen einführenden Erläuterungen, die den an sich bekannten Stand der Technik widerspiegeln, soll nun als Erstes gemäß einer besonders bevorzugten Ausführungsform der Erfindung unter Bezugnahme auf die Fig. 3 bis 7 das erfindungsgemäße Konzept der Erfassung und Berücksichtigung eines Unschärfebereichs im Fall der Motorstromerfassung mit Ripple-Zählung (d.h. unter Detektion der Welligkeiten oder Zacken im erfassten Motorstrom) mehr im Detail erläutert werden. In Fig. 3 ist in einem Diagramm ähnlich Fig. 1B der Fall dargestellt, dass im Motorstrom 3 zu einem Zeitpunkt T1, an einer Stelle 11, wo eigentlich eine Welligkeit oder Zacke 12 zu erwarten war, diese Welligkeit fehlt. Demgemäß bleibt an dieser Stelle 11, zum Zeitpunkt T1, die Positions-Zählung ohne Inkrementierung, vgl. die an dieser Stelle T1 konstant, weiterlaufende Zähl-Positions-Kurve 4. Diese "Unsicherheit" wird als Abweichung vom erwarteten Signalmuster erfasst, und es wird der durch die Positions-Zählung gegebenen Position 4 ab diesem Zeitpunkt T1 ein Unschärfeintervall, somit ein Unschärfebereich 13 zu beiden Seiten der Positions-Kurve 4 hinzugefügt. Dieser Unschärfebereich 13 wird bei allen weiteren Zählungs-Inkrementierungen beibehalten und gegebenenfalls um jeweils ein weiteres Inkrement symmetrisch nach oben und unten hin vergrößert, wenn weitere Unsicherheits-Situationen, d.h. Abweichungen von dem erwarteten Signalmuster (siehe die Kurve für den Strom 3 in Fig. 1B) festgestellt werden.

In Fig. 4 ist eine andere Unsicherheits-Situation dargestellt, gemäß welcher zu einem Zeitpunkt T2 eine unerwartete zusätzliche Strom-Welligkeit 14 auftritt, so dass an dieser Stelle eine Positions-Zählung, d.h. Positions-Inkrementierung, vorgenommen wird, vgl. die dort, bei T2, gegebene Stufe in der Positions-Kurve 4. Bei der unmittelbar darauf folgenden Ripple-Welligkeit 15, die an sich dem erwarteten Ripple-Muster entspricht, erfolgt eine weitere Positions-Zählung und somit Positions-Inkrementierung. Da der Ripple-Impuls 14 nur kurzzeitig vor dem erwarteten Ripple-Impuls 15 auftritt, wird beispielhaft dieser Ripple-Impuls 14 als ordnungsgemäß für die Positions-Zählung akzeptiert, jedoch wird beim unmittelbar darauf folgenden Ripple-Impuls 15 wegen des kurzen Zeitintervalls (T1-T2) die Unschärfe-Zählung aktiviert und ein Unschärfebereich 13 symmetrisch beidseits der Positions-Kurve 4 hinzugefügt.

In Fig. 5 ist die so über einen längeren Zeitraum erfasste Position s in Abhängigkeit von der Zeit t einschließlich eines Unschärfebereichs 13 veranschaulicht, welcher im, in Fig. 5, gezeigten Beispiel nach einer ersten Hinzufügung bei T1 noch zweimal, zu Zeitpunkten T3 und T4, entsprechend zu diesen Zeitpunkten festgestellten Unsicherheits-Situationen durch entsprechende Unschärfe-Zählung verbreitert ist. Diese Verbreiterung des Unschärfebereichs 13 ist so lange statthaft, bis ein Maximum erreicht wird, bei dem die angestrebte Positionsverfolgung in Verbindung mit zusätzlichen Funktionen, wie etwa im Fall eines Kfz-Fensters mit der Funktion eines Einklemmschutzes, nicht mehr sicher genug wäre.

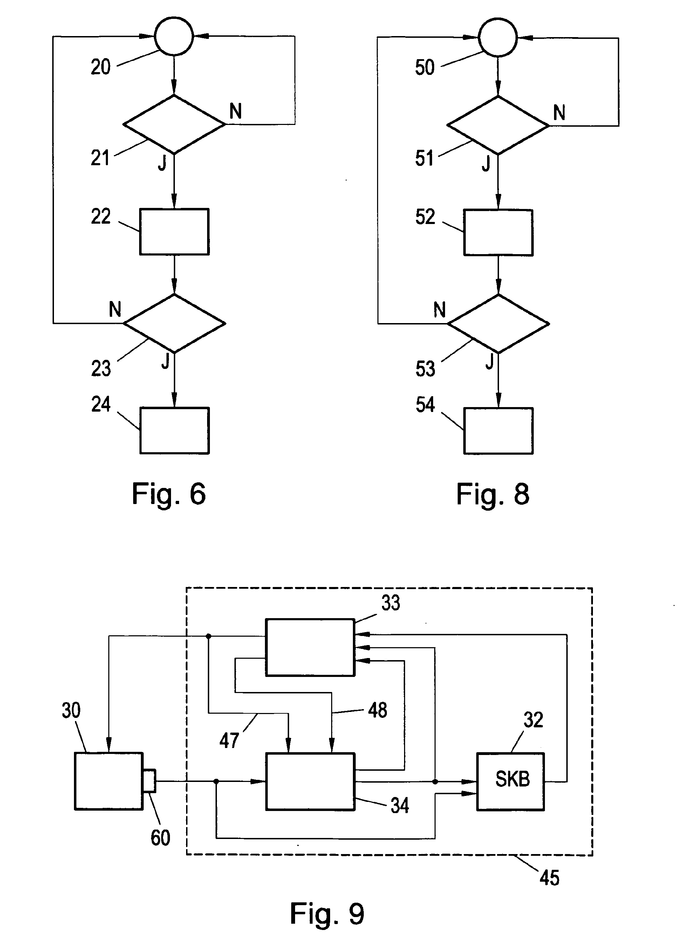

Dieser Ablauf ist im Diagramm gemäß Fig. 6 schematisch veranschaulicht, wobei nach einem Startfeld 20 in einem Abfragefeld 21 abgefragt wird, ob die Ripple-Zeit, d.h. die Zeit zwischen zwei Zacken im Motorstromsignal, zu kurz oder zu lange ist, verglichen mit der letzten Ripple-Zeit. Dabei werden wie bereits vorstehend anhand der Fig. 4 dargelegt geringfügige Abweichungen, entsprechend etwa einem Verlangsamen oder Beschleunigen des Motors, akzeptiert, wobei für diese Abweichungen ein Wert vorgegeben werden kann.

Wenn im Abfragefeld 21 gemäß Fig. 6 keine zu lange oder zu kurze Ripple-Zeit festgestellt wird, d.h. wenn die Ripple-Zacken dem erwarteten Signalmuster entsprechen, wird zum Startfeld 20 zurückgekehrt. Im anderen Fall wird gemäß einem Feld 22 die Unschärfe-Zählung um ein Inkrement erhöht, und es wird ein Unschärfe-Intervall zur Positions-Kurve 4 hinzugefügt oder aber der bereits bestehende Unschärfebereich 13 in ein Inkrement oder Intervall positiv und negativ verbreitert.

Entsprechend einem weiteren Abfragefeld 23 wird sodann überprüft, ob die Unsicherheits-Zählung, d.h. die insgesamt erreichte Breite des Unschärfebereichs 13, größer ist als ein vorherbestimmter Grenzwert. Wenn dies nicht der Fall ist, wird wiederum zum Startfeld 20 zurückgekehrt. Wenn jedoch der Grenzwert, das Maximum, erreicht wurde, werden gemäß Feld 24 die automatischen Antriebsbewegungen abgeschaltet, wobei sie so lange abgeschaltet bleiben, bis eine vorgegebene bekannte Position erreicht wird, bei der der Unschärfebereich 13 auf Null zurückgestellt wird.

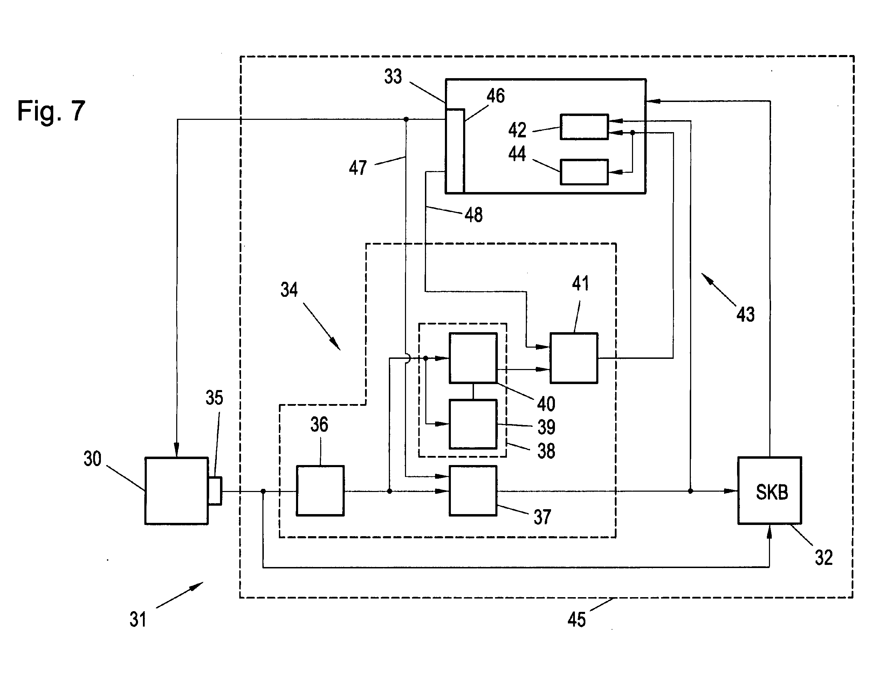

In Fig. 7 ist schematisch ein Elektromotor 30 mit einem zugehörigen Steuersystem 31 mit einem Schließkraftbegrenzer-(SKB-)Modul 32 gezeigt, wie dies an sich aus dem Stand der Technik bekannt ist. Das Schließkraftbegrenzer-Modul 32 steuert ein Motorsteuer-Modul 33 an, mit welchem das jeweilige Bedienkonzept realisiert wird. Zusätzlich enthält das Steuersystem 31 eine Vorrichtung 34 zur laufenden Erkennung, d.h. Verfolgung, der Position des Motors 30 und somit des von diesem Motor 30 angetriebenen Bauteils, z.B. eines Kfz-Fensters (nicht dargestellt). Zu dieser Positionsverfolgung sind dem Motor 30 Strommessmittel 35 zugeordnet, denen Filtermittel 36 in Form eines Ripple-Filters nachgeschaltet sind. Am Ausgang dieser Filtermittel 36 tritt ein Signal auf, dass die Motorstrom-Kurve I bzw. 3 gemäß den Fig. 1B, 3 oder 4 repräsentiert und das danach einem Positionszähler 37 zugeführt wird, der die Welligkeiten 3 bzw. 12, 14, 15 im Motorstrom I zählt, um so eine Positions-Zählung entsprechend der Positions-Kurve 4 gemäß den Fig. 1B, 3 oder 4 vorzusehen. Dieses Positionssignal wird an das SKB-Modul 32 ebenso wie an das Motorsteuermodul 33 angelegt.

Weiters ist gemäß Fig. 7 ein Abweichungsdetektor 38 vorgesehen, der Speichermittel 39 zum Speichern der zuletzt zugeführten Ripple-Welligkeiten 3 oder allgemein des erwarteten Signalmusters 39 sowie Vergleichsmittel 40 zum Vergleichen der jeweils einlangenden Ripple-Welligkeiten mit dem in den Speichermitteln 39 abgelegten Muster enthält. Bei Abweichungen wird ein Unschärfesignal-Zähler 41 zwecks Zählererhöhung im Sinne einer Inkrementierung des Unschärfebereichs 13, wie vorstehend erläutert, angesteuert.

Das Motorsteuermodul 33 enthält eine Zusammenfügungsstufe 42, um dieses Unschärfe-Intervall gemäß Fig. 3 und 4 zur Position 4 in Fig. 3 und 4 beidseits symmetrisch, wie vorstehend erläutert, hinzuzufügen. Demgemäß bildet diese Stufe 42 zusammen mit dem Unschärfesignal-Zähler 41 Mittel 43 zum Festlegen des Unschärfebereichs 13.

Gleichzeitig wird die Zählung des Unschärfesignalzählers 41 einem Maximum-Detektor 44 zur Feststellung zugeführt, ob ein vorgegebener Maximalwert für die Breite des Unschärfebereichs 13 erreicht ist. Das Motorsteuermodul 33 kann, im Übrigen in an sich herkömmlicher Weise ausgeführt sein, so dass sich diesbezüglich eine weitere Erläuterung erübrigt. Mit einer strichlierten Linie 45 ist ferner in Fig. 7 noch angedeutet, dass die verschiedenen innerhalb dieser Linie enthaltenen Komponenten auch durch einen Mikrocomputer (µC) realisiert sein können, wobei insbesondere die einzelnen Einheiten oder Module 32 sowie 36-43 durch Software-Module des Mikrocomputers 45 realisiert sein können. Selbstverständlich wäre aber auch eine hardwaremäßige Ausführung mit diskreten Schaltungskomponenten denkbar.

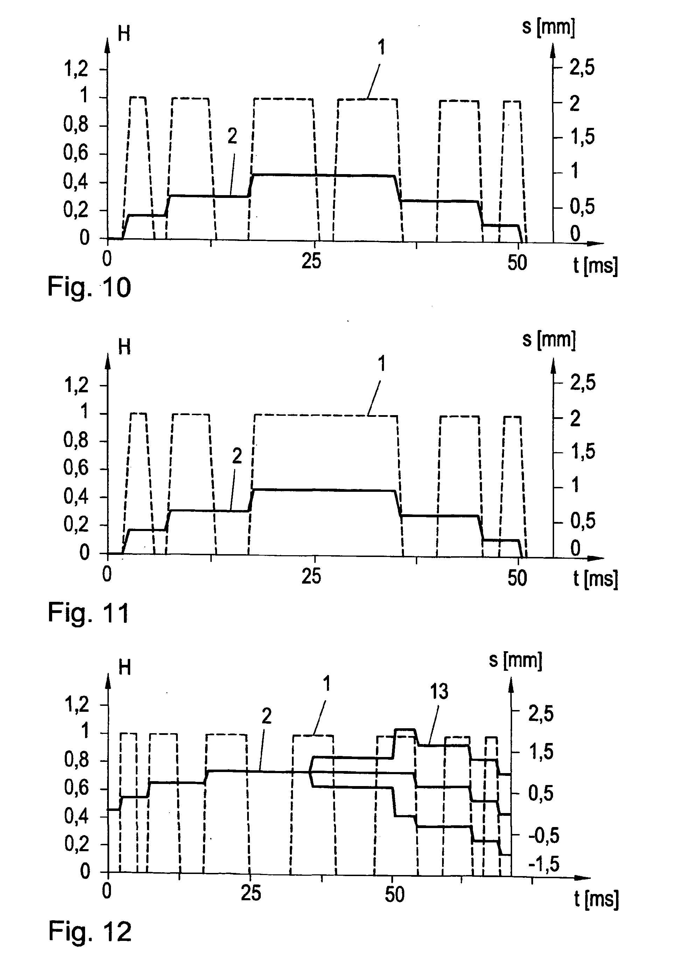

Weiters ist aus Fig. 7 ersichtlich, dass vom Motorsteuermodul 33 über eine Schnittstelle 46 und eine Verbindung 47 ein Motor-Befehlsignal zugeführt, das die Drehrichtung anzeigt, um so den Positions-Zähler 37 zum Aufwärtszählen oder aber, bei einer Umkehr der Bewegungsrichtung des Motors 30, in Abwärtsrichtung zählen zu lassen. Ein solches eine Bewegungsrichtungs-Umkehr angebendes Signal kann insbesondere bei Ausbildungen mit nur einem einzigen Hall-Sensor von Vorteil sein, um unklare Impuls-Situationen zur Zeit der Bewegungsumkehr zu analysieren, wie nachstehend noch im Detail anhand der Fig. 10-12 erläutert werden wird. Eine weitere Verbindung 48 deutet die Ansteuerung des Unschärfesignal-Zählers 41 für den Fall seiner Rückstellung auf Null an, wenn eine vorgegebene, bekannte Position erreicht wird.

Die nunmehr zu beschreibenden Figuren 8 - 12 beziehen sich auf ein Beispiel, bei dem Hallsignal-Impulse für die Positionsverfolgung verwendet werden, vgl. auch die einleitend erwähnte Fig. 1A. Diese Hallsignal-Impulse werden von einem Hallsensor abgegeben, der der Motorwelle, die mit entsprechenden Magneten ausgerüstet ist, zugeordnet ist, um zufolge der Polwechsler die Drehbewegungen des Elektromotors, der ein Bauteil, wie z.B. ein Fenster, ein Schiebedach oder einen Sitz eines Kraftfahrzeugs, antreibt, zu erfassen. Auch hier können Unsicherheits-Situationen ähnlich jenen wie in den Fig. 3 und 4 veranschaulicht auftreten, vgl. im Übrigen auch die noch näher zu erläuternde nachfolgende Fig. 12.

Demgemäß wird auch im Fall der Auswertung von Hallsignal-Impulsen in Entsprechung zu den Ausführungen zu Fig. 3 und 4 eine Prüfung auf Unsicherheits-Situationen, bei fehlenden oder doppelten Hallsignal-Impulsen, vorgenommen und im gegebenen Fall ein Unschärfebereich 13 gebildet bzw. verbreitert.

In Fig. 8 ist ein dem Ablaufdiagramm gemäß Fig. 6 ähnliches Ablaufdiagramm für den Fall der Verwendung von Hallsignal-Impulsen zur Positions-Zählung und Unschärfe-Zählung veranschaulicht. Dabei wird in diesem Beispiel nach einem Startfeld 50 gemäß einem Abfragefeld 51 abgefragt, ob eine unerwartete Impulsfolge während eines Richtungswechsels vorliegt. Wenn nicht, wird zum Startfeld 50 zurückgekehrt. Wenn jedoch eine derartige unerwartete Impulsfolge detektiert wird, wird gemäß einem Feld 52 der Unschärfesignal-Zähler (41 in Fig. 7) aktiviert, so dass ein Unschärfebereich 13 der durch die Positions-Zählung gegebenen Position 4 (Fig. 3 und 4) hinzugefügt bzw. verbreitert wird. Bei einer nachfolgenden Abfrage, gemäß Abfragefeld 53, wird überprüft, ob der Unschärfesignal-Zähler seinen vorherbestimmten maximalen Zählwert erreicht hat, d.h. ob der Unschärfebereich 13 seine maximale Breite erreicht hat, und wenn dies zutrifft, werden gemäß Feld 54 in Fig. 8 die automatischen Bewegungen, d.h. der automatische Antrieb, des Bauteils außer Funktion gesetzt, bis eine genau bekannte Position, wie eine Endposition eines Fensters, erreicht wird. Wenn hingegen der maximale Unschärfebereich noch nicht gegeben ist (Abfragefeld 53), wird zum Startfeld 50 des Ablaufs zurückgegangen.

In Fig. 9 ist in einem allgemeinen Blockschaltbild eines Steuersystems 31 weitestgehend ähnlich jenem gemäß Fig. 7 der Fall für die Positions-Zählung und Unschärfeintervall-Bestimmung auf der Basis von Hallsignal-Impulsen veranschaulicht, wobei Komponenten, die Komponenten gemäß Fig. 7 entsprechen, mit denselben Bezugszeichen bezeichnet sind. Das Blockschaltbild der Fig. 9 ist weiters gegenüber jenem von Fig. 7 insofern vereinfacht, als die Vorrichtung 34, mit der die Positions-Zählung sowie die Unschärfesignal-Zählung mit Hilfe der in Fig. 7 gezeigten Module 37-41 erfolgt, nur als allgemeiner Block veranschaulicht ist. Gegenüber Fig. 7 sind in Fig. 9 jedoch die Ripple-Filtermittel 36 entfallen. Weiters ist gemäß Fig. 9 dem Motor 30 anstatt der Strommessmittel 35 zumindest ein Hallsensor 60 zugeordnet, und die Hallsignal-Impulse werden der Vorrichtung 34 sowie dem SKB-Modul 32 zugeführt. Im Weiteren entspricht die Ausbildung und Funktion des Systems 31 jener gemäß Fig. 7, so dass sich eine neuerliche Beschreibung erübrigen kann. Auch im Fall der Fig. 9 wird zur Erfassung der Positionsunsicherheit eine Unschärfesignal-Zählung vorgenommen und parallel zur Positions-Zählung dem Motorsteuermodul 33 zugeführt, wo das Unschärfeintervall bis zum Erreichen eines Maximums (siehe Maximumwert-Detektor 44 in Fig. 7) zur Positions-Zählung hinzugefügt wird. Bei 47 wird wiederum der Vorrichtung 34 ein Motorbefehl betreffend Drehrichtungsumkehr zugeleitet und bei 48 wird ein mit Hilfe eines nicht näher gezeigten Detektormoduls ein Motorsteuermodul 33, das vorgegebene bekannte Positionen erkennt, ein entsprechendes Signal der Vorrichtung 34 zugeführt, um dort den Unschärfesignal-Zähler (41 in Fig. 7) auf Null zurückzusetzen.

In Fig. 10 und 11 sind ähnlich der Darstellung in Fig. 1A Hallsignal-Impulse 1 sowie eine Positions-Kurve 2 veranschaulicht, nunmehr jedoch für den Fall einer Umkehr der Drehrichtung des Motors. Die Hallsignal-Impulse werden dabei entsprechend der Verlangsamung des Motors (zur Mitte der Darstellung in Fig. 10 hin) breiter, wobei dann ein relativ schmales Intervall zwischen den beiden breiten Impulsen - entsprechend der Umkehr der Motordrehung - gegebenen ist, wonach die Hallsignal-Impulse wieder kürzer werden, da der Motor beschleunigt. Diese Situation kann als Umkehr der Drehrichtung des Motors erkannt werden, abgesehen davon, dass vom Motorsteuermodul 33 wie erwähnt eine entsprechende Information an die Vorrichtung 34 übermittelt wird, um die Drehrichtungsumkehr anzuzeigen.

Ähnliches gilt auch für das Beispiel gemäß Fig. 11, in der ein besonders breiter Impuls in der Mitte des Diagramms - entsprechend einem Stillstand des Motors - bei der Drehrichtungsumkehr, bevor der Motor wieder in die andere Richtung umzulaufen beginnt, vorhanden ist. Entsprechend bleibt die Positions-Kurve 2 während dieser Zeit auf dem gegebenen Pegel und sinkt dann stufenförmig, entsprechend dem Umlauf des Motors in der nunmehr entgegengesetzten Richtung, wieder ab.

In Fig. 12 ist eine Situation bei der Drehrichtungsumkehr veranschaulicht, bei der der exakte Punkt der Umkehr der Drehrichtung des Motors nicht erkennbar ist, da in diesem Bereich ungefähr drei gleich breite Hallsignal-Impulse 1 vorliegen. Hier ist somit eine Unsicherheit in der Positionserfassung gegeben, und die Hallsignal-Impulse entsprechen in diesem Bereich nicht dem erwarteten Muster etwa gemäß Fig. 10 oder 11. Demgemäß wird beginnend mit dem mittleren Hallsignal-Impuls der Unschärfesignal-Zähler 41 aktiviert, und es wird ein Unschärfebereich 13, der sich beim nächsten Hallsignal-Impuls verbreitert, zur Positions-Kurve 2 hinzugefügt, wie im rechten Teil der Fig. 12 erkennbar ist. Auch hier wird dieser Unschärfebereich 13 in Form einer Bandbreite der Positionserfassung beidseits, d.h. oberhalb und unterhalb, der Positions-Kurve 2 symmetrisch hinzugefügt. Die erfasste Position ist somit auch hier wiederum durch die gezählte Position plus/minus Unsicherheits-Intervall oder Toleranzbereich gegeben.

## Patentansprüche

1. Verfahren zum Verfolgen der Position eines von einem Elektromotor angetriebenen Bauteils, wobei Drehbewegungen des Elektromotors erfasst und zu einer Positions-Zählung herangezogen werden, **dadurch gekennzeichnet, dass** Abweichungen von einer erwarteten Positions-Zählung festgestellt und als Unschärfebereich zur durch die Positions-Zählung gegebenen Position hinzugefügt werden.

2. Verfahren nach Anspruch 1, **dadurch gekennzeichnet, dass** die Drehbewegung des Elektromotors mit Hilfe von Hall-Sensormitteln erfasst und Hallsignal-Impulse zur Positions-Zählung herangezogen werden, wobei Abweichungen von einem erwarteten Impulsmuster zur Bestimmung des Unschärfebereichs herangezogen werden.

3. Verfahren nach Anspruch 1, **dadurch gekennzeichnet, dass** die Drehbewegungen des Gleichstrom-Elektromotors durch Ermitteln von durch Motorkommutationen bewirkten Strom-Welligkeiten erfasst werden, wobei die Strom-Welligkeiten zur Positions-Zählung herangezogen und Abweichungen von einem erwarteten Welligkeits-Muster zur Bestimmung des Unschärfebereichs herangezogen werden.

4. Verfahren nach einem der Ansprüche 1 bis 3, **dadurch gekennzeichnet, dass** ein automatischer Antrieb des Bauteils bei Erreichen eines vorgegebenen maximalen Unschärfebereichs beendet und/oder für zukünftige Bewegungen deaktiviert wird.

5. Verfahren nach einem der Ansprüche 1 bis 4, **dadurch gekennzeichnet, dass** der Unschärfebereich bei Erreichen einer vorgegebenen bekannten Position des Bauteils auf Null zurückgesetzt wird.

6. Verfahren nach einem der Ansprüche 1 bis 5, **dadurch gekennzeichnet, dass** der Unschärfebereich symmetrisch beidseits der Position zufolge der tatsächlichen Positions-Zählung hinzugefügt wird.

7. Vorrichtung zum Verfolgen der Position eines von einem Elektromotor angetriebenen Bauteils, mit einem Positionszähler, dem von Drehbewegungen des Elektromotors hergeleitete Zählsignale zur Positions-Zählung zugeleitet werden, **dadurch gekennzeichnet, dass** ein Abweichungsdetektor (38) zum Feststellen von Abweichungen im Auftreten der Zählsignale von einem aufgrund vorheriger Zählsignale erwarteten Auftreten vorgesehen ist, der mit Mitteln (43) zum Festlegen eines Unschärfebereichs (13) verbunden ist, welcher in Summiermitteln der durch die Positions-Zählung gegebenen Position hinzugefügt wird.

8. Vorrichtung nach Anspruch 7, **dadurch gekennzeichnet, dass** die Mittel (43) zum Festlegen eines Unschärfebereichs (13) eine Zusammenfügungsstufe (44) zum Hinzufügen des Unschärfebereichs (13) zur Position aufweist.

9. Vorrichtung nach einem der Ansprüche 7 oder 8, **dadurch gekennzeichnet, dass** Hall-Sensormittel zur Herleitung der Zählsignale in Form von Hallsignal-Impulsen (H;1) vorgesehen sind.

10. Vorrichtung nach einem der Ansprüche 7 oder 8, **dadurch gekennzeichnet, dass** Strommessmittel (35) zum Ermitteln von durch Motorkommutationen des Gleichstrom-Elektromotors (30) bewirkte Strom-Welligkeiten vorgesehen sind, die als Zählsignale herangezogen werden.

11. Vorrichtung nach Anspruch 10, **dadurch gekennzeichnet, dass** die Strommessmittel (35) mit Filtermitteln (36) zum Herausfiltern der Strom-Welligkeiten verbunden sind.

12. Vorrichtung nach einem der Ansprüche 7 bis 11, **gekennzeichnet durch** einen Detektor (44) zur Feststellung des Erreichens eines vorgegebenen Maximalwerts für die Breite des Unschärfebereichs.

13. Vorrichtung nach einem der Ansprüche 7 bis 12, **dadurch gekennzeichnet, dass** die Mittel zum Festlegen des Unschärfebereichs mit einem, zumindest eine vorgegebene bekannte Position des Bauteils erfassenden Positionsdetektor verbunden sind, um bei Erreichen der vorgegebenen bekannten Position den Unschärfebereich auf Null zurückzusetzen.

14. Vorrichtung nach einem der Ansprüche 7 bis 13, **dadurch gekennzeichnet, dass** die Mittel zum Festlegen des Unschärfebereichs einen Unschärfesignal-Zähler (41) enthalten.

## Claims

1. Method for tracking the position of a component driven by an electric motor, rotational movements of the electric motor being detected and used for a position count, **characterised in that** deviations from an anticipated position count are determined and added to the position given by the position count as an uncertainty region.

2. Method according to claim 1, **characterised in that** the rotational movement of the electric motor is detected using Hall sensor means and Hall signal impulses are used for a position count, deviations from an anticipated impulse pattern being used in order to determine the uncertainty region.

3. Method according to claim 1, **characterised in that** the rotational movements of the direct current electric motor are detected by determining the current ripple signals brought about by means of commutations of the motor, the current ripple signals being used for a position count and deviations from an anticipated ripple signal pattern being used in order to determine the uncertainty region.

4. Method according to one of the claims 1 to 3, **characterised in that** an automatic drive of the component is ended on reaching a predetermined maximum uncertainty region and/or is deactivated for future movements.

5. Method according to one of the claims 1 to 4, **characterised in that** the uncertainty region is reset to zero on reaching a predetermined known position of the component.

6. Method according to one of the claims 1 to 5, **characterised in that** the uncertainty region is added symmetrically on both sides to the position as a result of the actual position count.

7. Device for tracking the position of a component driven by an electric motor with a position counter, wherein count signals derived from the rotational movements of the electric motor are fed to the position count, **characterised in that** provision has been made for a deviation detector (38) for determining deviations in the occurrence of the count signals from an expected occurrence based on the previous count signals, which is connected to means (43) for determining an uncertainty region (13) which is added in summation means to the position given by the position count.

8. Device according to claim 7, **characterised in that** the means (43) for determining an uncertainty region (13) has a joining step (44) in order to add the uncertainty region (13) to the position.

9. Device according to one of the claims 7 or 8, **characterised in that** provision has been made for Hall sensor means for the derivation of the count signals in the form of Hall signal impulses (H;1).

10. Device according to one of the claims 7 or 8, **characterised in that** provision has been made for current measuring means (35) for determining current ripple signals brought about by means of commutations of the motor of the direct current electric motor (30) that are used as count signals.

11. Device according to claim 10, **characterised in that** the current measuring means (35) are connected to filter means (36) for filtering out the current ripple signals.

12. Device according to one of the claims 7 to 11, **characterised by** a detector (44) for determining when a predetermined maximum value for the width of the uncertainty region is reached.

13. Device according to one of the claims 7 to 12, **characterised in that** the means for determining the uncertainty region are connected to at least one predetermined known position of the position detector detecting the component in order to reset the uncertainty region to zero on reaching the predetermined known position.

14. Device according to one of the claims 7 to 13, **characterised in that** the means for determining the uncertainty region include an uncertainty signal counter (41).

## Revendications

1. Procédé pour suivre la position d'une pièce entraînée par un moteur électrique, dans lequel des mouvements de rotation du moteur électrique sont enregistrés et utilisés pour un comptage de position, **caractérisé en ce que** des écarts d'un comptage de position escompté sont constatés et ajoutés en tant que plage d'incertitude à la position donnée par le comptage de position.

2. Procédé selon la revendication 1, **caractérisé en ce que** le mouvement de rotation du moteur électrique est enregistré à l'aide de capteurs à effet Hall et des impulsions de signaux de Hall sont utilisées pour le comptage de position, des écarts d'un modèle d'impulsion escompté étant utilisés pour déterminer la plage d'incertitude.

3. Procédé selon la revendication 1, **caractérisé en ce que** les mouvements de rotation du moteur électrique à courant continu sont enregistrés en déterminant des ondulations de courant provoquées par des commutations du moteur, dans lequel les ondulations de courant sont utilisées pour le comptage de position et des écarts d'un modèle d'ondulation escompté sont pris en considération pour déterminer la plage d'incertitude.

4. Procédé selon l'une quelconque des revendications 1 à 3, **caractérisé en ce que**, lorsqu'une plage d'incertitude maximale prédéfinie est atteinte, un entraînement automatique de la pièce est terminé et/ou désactivé pour de futurs mouvements.

5. Procédé selon l'une quelconque des revendications 1 à 4, **caractérisé en ce que** la plage d'incertitude est remise à zéro lorsqu'une position connue prédéfinie de la pièce est atteinte.

6. Procédé selon l'une quelconque des revendications 1 à 5, **caractérisé en ce que** la plage d'incertitude est ajoutée symétriquement de part et d'autre de la position conformément au comptage de position réel.

7. Dispositif pour suivre la position d'une pièce entraînée par un moteur électrique, comprenant un compteur de position, auquel sont acheminés des signaux de comptage déduits des mouvements de rotation du moteur électrique pour le comptage de position, **caractérisé en ce qu'**il est prévu un détecteur d'écart (38) pour constater des écarts à l'apparition des signaux de comptage par rapport à l'apparition escomptée en raison de signaux de comptage précédents, lequel est connecté à des moyens (43) pour fixer une plage d'incertitude (13), qui est ajoutée, dans des moyens de sommation, à la position donnée par le comptage de position.

8. Dispositif selon la revendication 7, **caractérisé en ce que** les moyens (43) pour fixer une plage d'incertitude (13) présentent un niveau d'assemblage (44) pour ajouter la plage d'incertitude (13) à la position.

9. Dispositif selon l'une quelconque des revendications 7 ou 8, **caractérisé en ce qu'**il est prévu des capteurs à effet Hall pour déduire les signaux de comptage sous la forme d'impulsions de signaux de Hall (H;1).

10. Dispositif selon l'une quelconque des revendications 7 ou 8, **caractérisé en ce qu'**il est prévu des moyens de mesure du courant (35) pour déterminer les ondulations de courant provoquées par les commutations du moteur électrique à courant continu (30), qui sont utilisées sous la forme de signaux de comptage.

11. Dispositif selon la revendication 10, **caractérisé en ce que** les moyens de mesure du courant (35) sont connectés à des moyens de filtrage (36) pour séparer par filtrage les ondulations de courant.

12. Dispositif selon l'une quelconque des revendications 7 à 11, **caractérisé par** un détecteur (44) pour déterminer le moment où une valeur maximale prédéfinie est atteinte pour la largeur de la plage d'incertitude.

13. Dispositif selon l'une quelconque des revendications 7 à 12, **caractérisé en ce que** les moyens pour fixer la plage d'incertitude sont connectés à un détecteur de position enregistrant au moins une position connue prédéfinie de la pièce dans le but de remettre à zéro la plage d'incertitude lorsque la position connue prédéfinie est atteinte.

14. Dispositif selon l'une quelconque des revendications 7 à 13, **caractérisé en ce que** les moyens pour fixer la plage d'incertitude contiennent un compteur de signal d'incertitude (41).
